(19) Europäisches Patentamt
European Patent Office
Office européen des brevets

(11) **EP 2 535 787 B1**

(12) **EUROPEAN PATENT SPECIFICATION**

(45) Date of publication and mention
of the grant of the patent:
**07.08.2019 Bulletin 2019/32**

(51) Int Cl.:
*G06F 3/01* (2006.01)    *G06K 9/00* (2006.01)

(21) Application number: **12004355.9**

(22) Date of filing: **08.06.2012**

(54) **3D free-form gesture recognition system and method for character input**

3D-Freiform-Gestenerkennungssystem und -verfahren zur Zeicheneingabe

Système et méthode de reconnaissance de geste en forme libre 3D pour la saisie des caractères

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2011 IL 21351411**

(43) Date of publication of application:
**19.12.2012 Bulletin 2012/51**

(73) Proprietor: **Deutsche Telekom AG**
**53113 Bonn (DE)**

(72) Inventors:
• **Berman, Sigal**
**Ramat Hasharon (IL)**
• **Stern, Helman**
**Tel Aviv (IL)**
• **Frolova, Darya**
**Beer Yakov (IL)**
• **Kliche, Ingmar**
**10407 Berlin (DE)**
• **Minkwitz, Johannes**
**10318 Berlin (DE)**
• **Stegmann, Joachim**
**64289 Darmstadt (DE)**

(74) Representative: **Flaccus, Rolf-Dieter**
**Flaccus · Müller-Wolff**
**Patentanwälte**
**Bussardweg 10**
**50389 Wesseling (DE)**

(56) References cited:
**WO-A1-2009/026337    US-A- 6 052 481**

• **HAMED KETABDAR ET AL: "MagiWrite", PROCEEDINGS OF THE 12TH INTERNATIONAL CONFERENCE ON HUMAN COMPUTER INTERACTION WITH MOBILE DEVICES AND SERVICES; LISBON, PORTUGAL ; SEPTEMBER 07 - 10, 2010, ACM, NEW YORK, NY, 7 September 2010 (2010-09-07), pages 443-446, XP058182516, DOI: 10.1145/1851600.1851701 ISBN: 978-1-60558-835-3**

**Description**

**Field of the Invention**

The present invention relates to the field of gesture recognition systems. More particularly, the invention relates to a method and apparatus for a 3D free-form gesture recognition system for character input.

**Background of the Invention**

Gesture tracking and recognition systems that allow free form movements in 3D space have been recently widely used in the home environment. Such systems (e.g. Wii) frequently require the use of hand-held pointing devices to detect movements in 3D space. Also, character input is possible using touch screen devices. Vision systems offer the freedom of gesturing in free air, but often require markings or physical attachments worn on the fingers.

Unencumbered (no markings or attachments to the body) free motion vision systems have the advantage of a "come as you are" system. Unencumbered 2D vision systems place increased demands on the development of real time, robust systems capable of operating in home environment. One way of overcoming the disadvantages of 2D systems is the use of 3D vision camera systems.

Dynamic gesture recognition systems based on single video camera output are able to recognize only planar gestures, and moreover, only gestures in x-y plane (parallel to the camera plane). Although many researches continue with attempts to create a robust dynamic gesture recognition system based on video stream data, the fact that the equipment does not allow the capture of all 3D space-time gesture variations, greatly restricts a potential gesture vocabulary design.

While recently 3D cameras have been widely used for hand and full body tracking in 3D space, gesture recognition methods for sign and character inputs still require gestures to be performed in a specific embedded 2D plane.

The same restriction holds for existing research and systems for digit recognition. Most of the work in the digit recognition field has been done on hand written digits using paper or a digital tablet.

Also, most dynamic hand gesture control methods are designed to use visual feedback such as an image of the user's hand located on a screen.

WO2009/026337 discloses a system for detecting and recognizing gestures and motion. However, WO2009/026337 requires a device being held in the hand of a user performing gestures in order to detect direction and magnitude of movements by sensors of the device. Also, WO2009/026337 is incapable of detecting motion of a hand while not holding a device and its camera relates merely to a camera of the hand-held device which may be used to sense motion by optical flow.

US6052481 discloses a method for processing previously obtained gestures. However US6052481 does not teach a method of obtaining hand-gestures.

All the methods described above have not yet provided satisfactory solutions to the problem of a user that is not sitting in front of the camera and performing the gesture in the plane that is not parallel to the camera image.

It is therefore an object of the present invention to provide a method and apparatus for free-form 3D gesture recognition system for character input.

It is another object of the present invention to provide a method and apparatus for free-form gesture recognition system in 3D for character input, without the need for a handheld device.

It is another object of the present invention to provide a method and apparatus for free-form gesture recognition system in 3D for character input, without the need for any visual or other electronic feedback.

It is yet another object of the present invention to provide a method and apparatus for free-form gesture recognition system in 3D for character input, which allows correct hand gesture digit recognition when the gesture is performed in any plane with respect to the camera plane, while user is standing sitting or lying anywhere in the camera field of view.

Other objects and advantages of the invention will become apparent as the description proceeds.

**Summary of the Invention**

In a first aspect, the present invention is directed to a system for 3D free-form hand-gesture recognition, based on hand-gestured character input, which comprises:

a) a memory for storing images taken by a 3D camera;
b) a computer for analyzing images representing trajectories of hand gestures and for extracting typical features related to a character during a training stage;
c) a database for storing the typical features after the training stage;

d) a processing unit for comparing the typical features extracted during the training stage to features extracted online, ***characterized in that:***

e) images of 3D hand gestures are acquired by the 3D camera, in front of which the 3D hand gestures are performed;

f) for each gesture type, computing a template matrix T by:

f.1) constructing a matrix from all ordered sets of features of the samples of said hand-gesture in said database, where each row of said matrix contains a feature from the ordered set of features of a gesture type and each column of said matrix contains an ordered set of features of a sample of hand-gesture;

f.2) for the features which may be tangent angles, computing a mixture of Gaussians using the Expectation Maximization (EM) algorithm;

f.3) computing models with Gaussian components and selecting a representing model;

f.4) finding a number of mixture of Gaussians components for hand-gesture type; f.5) computing a probabilistic pattern represented as a matrix for each gesture sample i of gesture type;

f.6) averaging all probabilistic pattern matrices;

g) for each gesture type in the database, computing a pattern matrix P by:

g.1) extracting hand 3D position from each camera frame to form a 3D trajectory;

g.2) conducting PCA over a cloud of 3D points corresponding to said 3D trajectory, to determine if the gesture is a projected trajectory;

g.3) projecting a hand-gesture trajectory, to obtain a 2D projected trajectory;

g.4) converting the projected trajectory into a set of features, ordered from the start of the hand-gesture trajectory;

g.5) for each of said features, computing the probability that a feature belongs to each of the Gaussian components of a gesture type; and

h) the comparison performed by said processing unit for each gesture type between a template matrix T and pattern matrix P, creates a Length and Probability of Longest Common Subsequence (MPLCS) which is used by a recognition component to classify said trajectories as certain gestures or non-gestures,

i) wherein said Length and Probability are computed by:

i.1) computing from the pattern matrix P, a vector of the non zeros values of the matrix P, a vector of their row indices which correspond to indices of mixture of Gaussians component, and a vector of their column indices, which correspond to input hand-gesture feature indices;

i.2) computing from the template matrix T for each gesture type, a vector of the non zeros values of the matrix, a vector of their row indices which correspond to indices of mixture of Gaussians component, and a vector of their column indices, which correspond to the hand-gesture feature indices of the hand-gesture samples in the database;

i.3) computing the LCS of row indices and column indices;

i.4) computing the vectors of their corresponding column indices from the of vector column indices and their corresponding common probability by multiplication of probabilities from the vector of the non-zero entries of matrices T and P;

i.5) retaining only the component with the highest common probability;

i.6) computing the probability of a sequence by summing the common probabilities of all its elements and selecting the longest subsequence with the highest probability.

In an embodiment of the system of the present invention, the system comprises:

(a) a training component, wherein mutual information is extracted from the given database of gesture trajectories; (b) a storage component, wherein the information obtained from the training stage is stored; (c) a recognition component, wherein an input trajectory is analyzed and classified either as a certain gesture from the gestures vocabulary or as a non-gesture.

In an embodiment of the system of the present invention, the training component comprises the following modules: (a) a feature extraction module; (b) a learning module; (c) a clustering module; (d) a template creation module.

In an embodiment of the system of the present invention, the feature extraction module receives a 3D trajectory as an input, uses inter-point directional changes as classifying features, and provides a vector of tangent angles as an output.

In an embodiment of the system of the present invention, the learning module receives feature vectors obtained from the feature extraction module, analyzes the feature vectors, and provides a set of clustering rules, being a set of mean and standard deviation values of the resulting most significant clusters, wherein the learning module performs the learning for each gesture type separately and the set of clustering rules is sent to the Storage.

In an embodiment of the system of the present invention, the clustering module receives as input a set of clustering rules from the Storage and a feature vector from the Feature extraction module, wherein the feature vector is clustered according to the predefined rules for creating an output in the form of a probabilistic pattern represented as a matrix.

In an embodiment of the system of the present invention, the template creation module receives the probabilistic patterns as an input from the clustering module, each of the patterns is represented as a matrix, while all the matrices in a set are of the same size, wherein the template creation module takes an average value of the set of input matrices and provides as an output a template matrix of the same size as the input matrices; each element of the template is the average value of the corresponding values of input matrices; the template created is sent to the Storage.

In an embodiment of the system of the present invention, the recognition component comprises the following modules: (a) a trajectory segmentation module; (b) a trajectory segment analysis module; (c) a feature extraction module; (d) a clustering module; (e) a template matching module; (f) a classification module.

In an embodiment of the system of the present invention, the trajectory segmentation module receives as an input a 3D trajectory and uses a sliding window to cut the 3D trajectory into segments, the segments are the output of the trajectory segmentation module.

In an embodiment of the system of the present invention, the trajectory segment analysis module receives as an input the segments from the trajectory segmentation module, and checks if the points of the segment can be approximated by a plane with a sufficient accuracy; and if so, the trajectory part is sent to the Feature Extraction module, and if the analyzed points do not belong to any plane, then system returns to the Trajectory Segmentation module.

In an embodiment of the system of the present invention, the template matching module receives as an input the probabilistic pattern matrix from the Clustering module and compares the pattern matrix to the template matrix from the Storage; wherein the output of this module is a pair of numbers: length and probability of the longest common subsequence between template and pattern matrices.

In an embodiment of the system of the present invention, the classification module receives as an input the two numbers of length and probability of the longest common subsequence between template and pattern matrices, and provides as an output a binary "yes" or "not" decision thereby classifying the input gesture is as a certain gesture from the gestures vocabulary or as a non-gesture.

In a second aspect, the present invention is directed to a method for 3D free-form hand-gesture recognition, based on hand-gestured character input, which comprises the steps of:

    a. storing in a memory, images representing trajectories of hand-gestures, for executing a training stage,;
    b. during said training stage, extracting typical features related to said input characters, from hand-gesture trajectories;
    c. storing said typical features;
    d. analyzing an input trajectory and comparing said input trajectory to the trajectories obtained during said training stage; and
    e. classifying said input trajectory either as a certain gesture from the gestures vocabulary or as a non-gesture;

characterized *in that:*

    f. images of 3D hand gestures are acquired by said 3D camera, in front of which said 3D hand gestures are performed;
    g. for each gesture type, computing a template matrix, by:

        g.1) constructing a matrix from all ordered sets of features of the samples of said hand-gesture in said database, where each row of said matrix contains a feature from the ordered set of features of a gesture type and each column of said matrix contains an ordered set of features of a sample of hand-gesture;
        g.2) for the features which may be tangent angles, computing a mixture of Gaussians using the Expectation Maximization (EM) algorithm;
        g.3) computing models with Gaussian components and selecting a representing model;
        g.4) finding a number of components of mixture of Gaussians for gesture type;
        g.5) computing a probabilistic pattern matrix for each hand-gesture sample i of gesture type;
        g.6) averaging all probabilistic pattern matrices;

    h. for each gesture type in the database, computing a pattern matrix P by:

        h.1) extracting hand 3D position from each camera frame to form a 3D trajectory;
        h.2) conducting PCA over a cloud of 3D points corresponding to said 3D trajectory, to determine if the hand-gesture is a projected trajectory;

h.3) projecting a hand-gesture trajectory, to obtain a projected trajectory;

h.4) converting the projected trajectory into a set of features, ordered from the start of the hand-gesture trajectory;

h.5) for each of said features, computing the probability that a feature belongs to each of the Gaussian components of a gesture type;

i. the comparison performed by said processing unit between a template matrix T and pattern matrix P, creates a Length and Probability of Longest Common Subsequence (MPLCS) which is used by a recognition component for classification,

j. wherein said Length and Probability are computed by:

j.1) computing from the pattern matrix P, a vector of the non zeros values of the matrix, a vector of their row indices which correspond to indices of mixture of Gaussians component, and a vector of their column indices, which correspond to input hand-gesture feature indices;

j.2) computing from the template matrix T for each gesture type, a vector of the non zeros values of the matrix T, a vector of their row indices which correspond to indices of mixture of Gaussians component, and a vector of their column indices Ct, which correspond to the hand-gesture feature indices of the hand-gesture samples in the database;

j.3) computing the LCS of row indices and column indices;

j.4) computing the vectors of their corresponding column indices from the vector of column indices and their corresponding common probability by multiplication of probabilities from vectors of non-zero entries of matrices T and P;

j.5) retaining only the component with the highest common probability;

k. j.6) computing the probability of a sequence by summing the common probabilities of all its elements and selecting the longest subsequence with the highest probability.

In an embodiment of the method of the present invention, step (a) comprises the following steps: (i) extracting features from the input 3D trajectory, using inter-point directional changes as classifying features, and generating a feature vector, being a vector of tangent angles, as an output; (ii) learning and analyzing the feature vector for each gesture type separately, providing a set of clustering rules, being a set of mean and standard deviation values of the resulting most significant clusters, and storing the set of clustering rules in the storage; (iii) clustering the feature vector according to the set of clustering rules, for creating an output in the form of a probabilistic pattern represented as a matrix; and (iv) creating templates by taking an average value of a set of matrices received as an input, providing a template matrix of the same size as the input matrices as an output, and storing the template in the Storage.

In an embodiment of the method of the present invention, step (c) comprises the following steps: (i) segmenting the 3D trajectory received as an input using a sliding window; (ii) analyzing the segments by checking if the points of each segment can be approximated by a plane with sufficient accuracy, and if so, extracting features from the trajectory part step, otherwise, repeating step (i); (iii) clustering the resulting feature vector; (iv) matching templates by receiving the probabilistic pattern matrix from clustering and comparing the pattern matrix to the template matrix from the Storage, thereby creating: length and probability of the longest common subsequence between template and pattern matrices; and (v) classifying the input gesture as a certain gesture from the gestures vocabulary or as a non-gesture and outputting a binary state that corresponds to the classification result.

## Brief Description of the Drawings

The above and other characteristics and advantages of the invention will be better understood through the following illustrative and non-limitative detailed description of preferred embodiments thereof, with reference to the appended drawings, wherein:

- Fig. 1 schematically shows a flow of the architecture of the system proposed by the present invention;
- Fig. 2 schematically shows a flow of the system implementation using a novel MPLCS method;
- Fig.3 schematically shows a flow diagram of the Training component;
- Fig. 4 schematically shows an example of a trajectory of the gesture digit "2" from the database that is converted into a feature vector, which is a vector of tangent angles.
- Fig. 5 schematically shows a flow diagram of the Recognition component;
- Fig. 6 schematically shows an example of digit "3" performed in different directions with respect to the camera, and how each trajectory is projected onto a different plane; and

- Fig. 7 schematically shows an example of matrices T and P, and corresponding vector R(T) and R(P).

## Detailed Description of Preferred Embodiments

Most of the work in the field of dynamic gesture recognition assumes that the user is sitting in front of the camera, so that gestures performed are in the plane perpendicular the camera's line of sight. If user is sitting aside from a screen or lying down, then the performed gesture/digit will have to be transformed (affine rigid transformation). In a limit case when the user is sitting perpendicular to the camera's line of sight, a digit trajectory will be projected onto the image plane as a straight line. The present invention allows correct hand gesture digit recognition when the gesture is performed in any plane with respect to the camera plane, while the user is standing sitting or lying anywhere in the camera's field of view.

The present invention allows characters or any gesture motion trajectory to be written in vertical, horizontal or slanted planes without the need to design multiple classifiers for each.

The invention allows (but is not limited to) TV channel selection using a single digit or sequence of digits. Spatial segmentation is assumed, but an explicit temporal segmentation is not required. This means that the system does not know where the gesture starts and ends, and does not require a pause between gestures. This allows easy and direct selection of a channel (in the case of a TV application) with 2 and 3 digit numbers.

According to an embodiment of the present invention, a feedback free operation is used in such a manner that the gesture may be performed from anywhere within the sensors' field of view, without the requirement that the operator obtain any visual or auditory feedback.

The gesture can be performed in any direction with arbitrary speed, with varying speed, and with arbitrary angle to the camera plane.

No constraining assumptions are imposed, such as: a uniform background, no other motion in the scene except for the hand etc.

The system performance does not depend on lighting conditions. It may also operate in the dark and under varying illumination conditions. Also the system is robust to background noise and occlusions. System takes as input a sequence of (x,y,z) coordinates each representing a centroid of hand location in 3D space. The centroids are a result of a hand tracking algorithm from using a depth sensing device. A sequence of centroids constitutes a gesture trajectory. The input stream is not segmented, meaning that the start and end of a gesture are not defined in advance. A sliding window is used to cut an input sequence of 3D points into pieces that are analyzed and sent to the classifier.

The trajectory is processed and its local descriptive features are extracted. The dimension of the extracted features is reduced to a single dimension, thus minimizing the system's computational load. Based on the extracted features, a new classification method called Most Probable Longest Common Subsequence (MPLCS) was developed. The method creates a novel stochastic template represented by a matrix and a modified Longest Common Subsequence algorithm is used to analyze the stochastic data. These results are then sent to the recognition module, which either classifies the particular digit or deems it as non-classified. When a gesture is recognized its representative command is sent to a state machine to enable an apparatus (TV control, robot control, etc.).

The input to the system which is a sequence of (x,y,z) coordinates, is obtained from a depth sensing device. In the case of depth sensing camera the output video should be processed to extract the centroid positions of the hand in each frame to create its trajectory.

The system functionality can be divided into three functional components:

1) *Training component-* given a database of gesture trajectories the system extracts mutual information about each trajectory type. This mutual information, which is called here a stochastic template is then added to a gesture vocabulary in a Storage unit and is used later for gesture recognition by Recognition unit. The Training unit is an off-line part of the system.

*2) Storage* - is a representation of gesture vocabulary. Each gesture is represented by a template. The Storage unit supports two operations, which are adding a new template to the vocabulary and deleting existing items from the vocabulary, if desired.

3) *Recognition component* - given a new gesture trajectory the system either recognizes this gesture as a gesture from the gesture vocabulary or classifies it as a non-gesture.

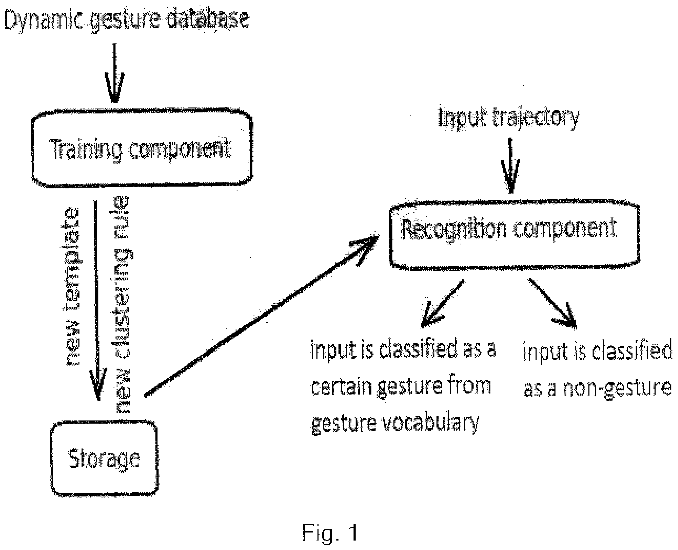

**Fig. 1** shows a flowchart of the system architecture. The system is represented as a combination of three independent components. Training component is performed off-line and converts a gesture trajectories database into a set of templates. The produced templates are kept in the Storage. Recognition component contains routines that are executed on-line to process an input trajectory and either classify it as a gesture from predefined vocabulary (from the Storage) or reject as a non-gesture.

Below is explained in detail a system implementation using a novel method of trajectory recognition which is called the Most Probable Longest Common Subsequence (MPLCS) method.

To guarantee a robust functionality of the system implemented using MPLCS , the system was designed as a combination of eight main modules. Each module is represented as a separated functional system part, or black box, which is characterized by its input and output data. Different combinations of the modules are used in the Training and Recognition system components. The architecture design allows each module to be separately modified without affecting other modules, thus overall system flow remains unchanged. Also it is possible to easily add new gestures to the system gesture vocabulary

The eight main modules of the system are: 1) Trajectory Segmentation module, 2) Trajectory Segment Analysis, 3) Feature Extraction, 4) Learning module, 5) Clustering module, 6) Template creation, 7) Template Matching, 8) Classification.

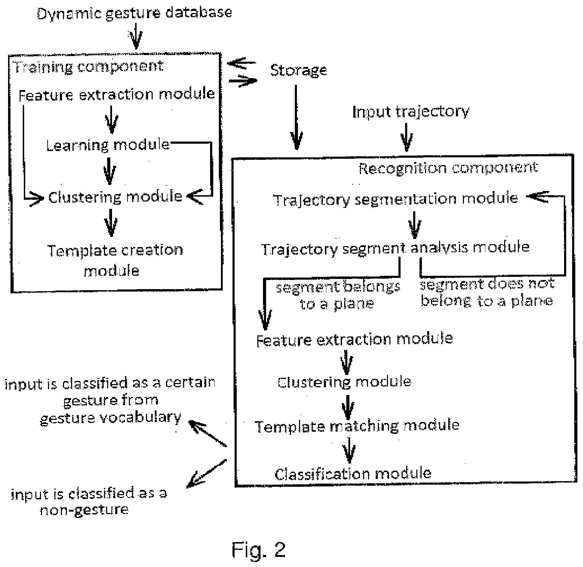

Fig. 2 shows a flow of a system implementation using said novel MPLCS method. The system is organized as a combination of three functional components, each containing a set of independent modules. The Training and Recognition components are connected via the Storage. The system is implemented using eight modules. Each module is built as an independent unit, so the same module can be used in more than one system components. In this implementation the Off-line Training component consists of four modules: Feature Extraction, Learning, Clustering and Template creation module. A detailed description of Training component and the modules it consists of can be found in the section "Training component of the system". Recognition component of the current system implementation is a combination of six modules: Trajectory Segmentation module, Trajectory Segment Analysis, Feature Extraction, Clustering module, Template Matching and Classification. The structure of Recognition component is described in the section "Recognition component of the system". In the Storage component, the templates created in the Template creation module and clustering rules created in the Learning module of the Training component are kept to be use then in Clustering and Template matching modules.

### Training component of the system

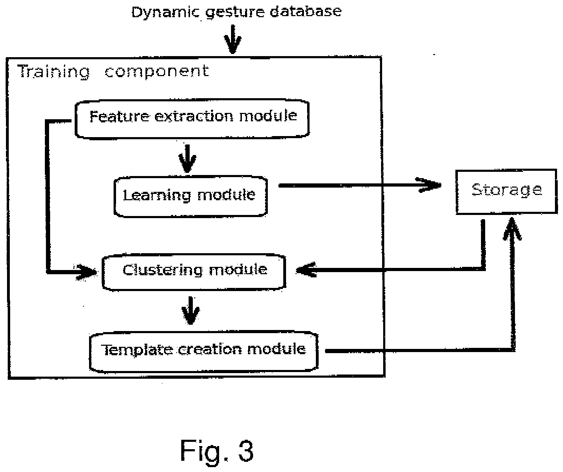

The goal of the Training component of the system is to extract mutual information (statistical information in the current implementation) from a given database of gesture trajectories. This information is then kept in the Storage component of the system. For the MPLCS method the Training component consists of four independent modules: Feature Extraction, Learning, Clustering and Template creation. Figure 3 shows a flow diagram of the Training component with arrows denoting consecutive implementation of modules. First, a database of 3D trajectories of a certain gesture is sent to the Feature Extraction module. Then the extracted features are analyzed in the Learning module to obtain a set of clustering rules. Once obtained, these clustering rules are kept in the Storage. The Clustering module produces a probabilistic pattern based on the feature vectors from the Feature Extraction module and clustering rule from the Storage. The pattern is sent to the Template Creation module to create a probabilistic template which is then kept in the Storage. Below a detailed description of this flow and four component modules is presented.

### Database capture

The present embodiment of the system requires a training set of gestures, preferably made by different people in order to capture all the performance variations affected by users' age, hand-writing, mood etc. Gesture digits and letters are different from digits and letters written on a paper so the existing databases of hand-written alpha-numeric characters cannot be used for the training. A database of 3D trajectories that correspond to the gestures from a gesture vocabulary is created. The database of each gesture contains 50-100 samples performed by different people in different manners. For each gesture type the average trajectory length L was computed and the database trajectories are re-sampled to have the same length L. Re-sampled database trajectories consist of the same number of equally distributed points, which means that only shape, but not velocity information was preserved.

### Feature extraction module

There are a lot of informational features that can be used to classify a trajectory, such as trajectory length, shape, scale, moments etc. The choice of the features may depend on a-priori information about the data. Many classification algorithms use global characteristics like trajectory shape or moments, thus reducing the number of features to a few features per trajectory. Most of the alignment algorithms like LCS or DTW use location information of each point that is actual point position (x-y coordinates), velocity and sometimes acceleration. The amount of features used in this case is large and the systems become memory and time consuming.

Drawing on the air is very different from drawing on a plane, so resulting trajectories may have very different shapes and orientations, they may also differ in size and velocity. Personal hand-writing styles also have a great impact on the result. The local features chosen in the present invention are inter-point directional changes. These features are stable enough to handle variations mentioned above and to describe the input trajectories with high accuracy.

Location of the hands centroids in a plurality of images provides a quality segmentation of the motion trajectory of a dynamic hand gesture.

Hand trackers allow the use of local centroid information to provide a sequence of vectors describing the directional motion and velocity of the hand. The output from the tracker is a set of 3D coordinates, so there are 3N features, where N is the number of points in the trajectory. Fortunately the dimensionality of the features used can be reduced by noticing the fact that naturally users perform "drawing" and "writing" on a plane even if this plane is imaginary. Thus a digit trajectory is approximately planar, even if the user is not sitting in front a camera (see Figure 1).

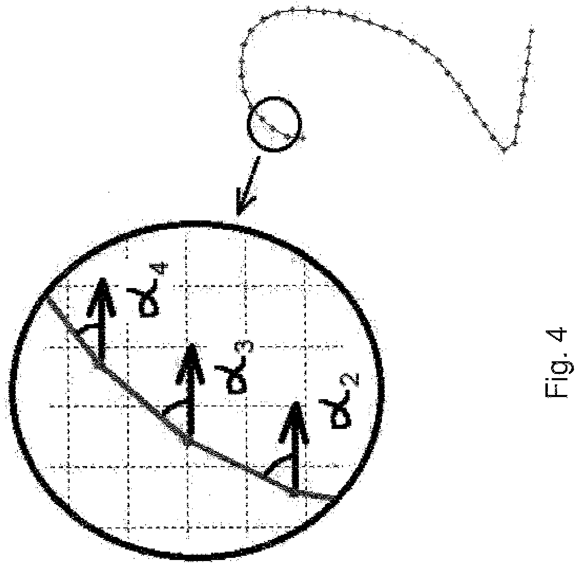

In the Trajectory Segment Analysis module each candidate part of the input 3D trajectory is analyzed in order to check whether it can be well fitted by a plane. If so, the trajectory is projected onto a fitting plane, and dimension of the feature vector thus is reduced to 2N. The trajectory on a plane can be described by the relative and absolute angle of each vector, and the resulting number of features is N-1. In the present invention the projected trajectory is described by inter-point changes - relative (tangent) angles of each vector. The output of a Feature Extraction module is a vector of tangent angles. In Fig. 4 it can be seen how the trajectory of gesture digit "2" from the database is converted into a feature vector, which is a vector of tangent angles.

### Learning module

Statistical learning methods provide a framework for constructing models from a set of data, i.e. analyzing, making decisions and predictions. The underlying assumption of all the statistical methods is a statistical nature of the data. Statistical methods may take into account a "non idealness" of data for example by predicting the amount of noise in the observation data. Thus statistical methods succeed in situations when a deterministic theory fails and these methods become more and more popular in Computer Vision based systems.

The extracted (learned) statistical information is used to create a stochastic template that represents all the gesture trajectories of a certain type.

Although the system is robust to noisy observations, the present invention does not model the amount of noise in advance thus avoiding the estimation of additional parameters. The amount of noise in the input trajectory is an implicit parameter and may be fixed at the very end (in the Classification module).

The Learning module of the system consists of a bunch of statistical learning techniques. Feature vectors obtained from Feature Extraction module are analyzed and a probabilistic template for each gesture type is created. The learning is performed for each gesture type separately.

For each tangent angle statistics is collected across the database. If all the re-sampled trajectories have N points, then they are converted into feature vectors of length (N-1). The distribution of each of these (N-1) tangent vectors can be approximated by a mixture of Gaussians. The mean and standard deviation values of the Gaussian functions are then found by the Expectation Maximization (EM) algorithm.

The tangent angles are clustered according to the data obtained by the EM algorithm. The initial number of clusters is equal to the total number of Gaussian components. Later the number of clusters is reduced by taking into account only the most significant ones.

The output of the Learning module is a set of *clustering rules,* which is a set of mean and standard deviation values of the resulting (the most significant) clusters. The set of clustering rules is sent to the Storage.

### Clustering module

This module takes as input a set of clustering rules from the Storage and a feature vector from the Feature extraction module. The feature vector is clustered according to these predefined rules in order to create a probabilistic pattern.

Given a trajectory (or to be precise, a feature vector that corresponds to this trajectory) of the gesture type that is analyzed, for each tangent angle $\alpha_j$ of this trajectory a probability of $\alpha_j$ of belonging to each cluster i is computed, using a scaled Gaussian probability function:

$$p_{ij} = \exp[(\alpha_j - \mu_i)^2/(0.2\sigma_i^2)].$$

Here $\mu_i$ and $\sigma_i$ are mean value and standard deviation of i-th cluster, and pij is the probability of angle $\alpha_j$ to belong to i-th cluster. The factor 0.2 guarantees that if $\alpha_j$ is close to the cluster boundary, which is ($\mu_i \pm \sigma_i$) then $p_{ij}$ is close to 0. A matrix of the values pij is called a probabilistic pattern of the trajectory feature vector.

Given a database of gesture trajectories of a certain type, a database of probabilistic patterns is created and these patterns are sent to the Template Creation module to compute a single stochastic template for each gesture type.

### Stochastic template creation module

Input to this module is a set of probabilistic patterns, each of these patterns is represented as a matrix. All the matrices in a set are of the same size.

In the current implementation of the system, a template creation is performed by taking an average value of the set of input matrices, although more sophisticated methods may be applied.

The output template matrix has the same size as input matrices. Each element of the template is the average value of the corresponding values of input matrices.

A template created is sent to the Storage.

### Recognition component of the system

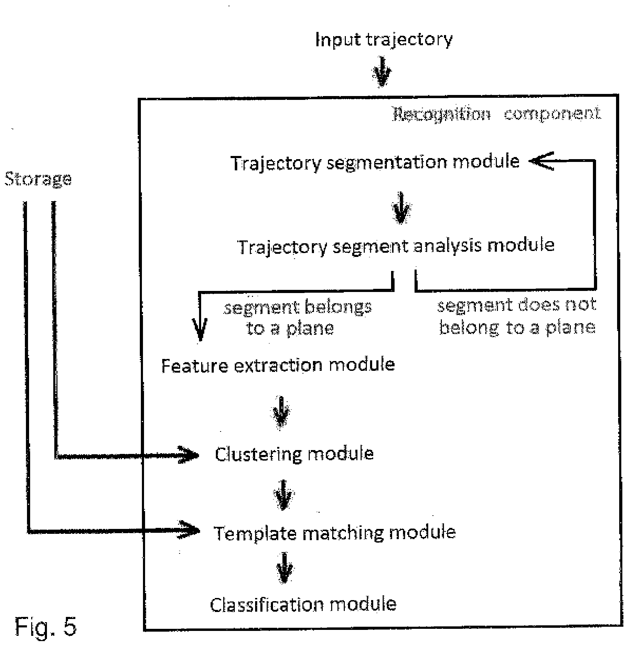

The goal of the Recognition component of the system is to analyze an input trajectory and to classify it either as a certain gesture from gesture vocabulary or as a non-gesture. For the MPLCS method the Recognition component consists of six independent modules: Trajectory segmentation, Trajectory segment analysis module, Feature Extraction, Clustering, Template matching and Classification. Fig. 5 shows a flow diagram of the Recognition component with arrows denoting consecutive implementation of modules. First, an input 3D trajectory is cut into pieces in Trajectory Segmentation module and if a piece belongs to a plane (it is checked in the Trajectory segment analysis module), then it is sent to the Feature Extraction module. The extracted features are clustered in the Clustering module according to the clustering rules, obtained from the Storage and a stochastic pattern is created. Next, in the Template matching module the obtained pattern is compared to the stochastic template from the Storage. The result of template and pattern comparison is sent to the Classification module to make a final decision if the template and pattern correspond to the same gesture type.

A detailed description of Recognition component flow is presented below.

The method implemented in the current system is based on the Longest Common Subsequence (LCS) algorithm which advocates the use of the longest common subsequence as an indication of the similarity relationship between sequences. Unlike the deterministic classical LCS the presented method first automatically extracts mutual statistical information from a dynamic gesture dataset.

### Trajectory segmentation module

The function of this module is to segment an input trajectory which is a sequence of (x,y,z) coordinates into pieces.

The input stream is not segmented a-priori, meaning that the start and end of a gesture are not defined. A sliding window is used to cut an input sequence of 3D points into parts, and these parts are then sent to the Segment Analysis module to check if these points can be approximated by a plane with a good accuracy. The size of the sliding window (i.e. the number of points the trajectory part consists of) may be determined experimentally from the database (as the average length of the gestures of certain type) or set manually.

An alternative method to segment an input trajectory is to use a "gesture spotting" method, which segments the gesture from the video stream by detecting the start and end of a gesture.

### Trajectory segment analysis module

A sliding window is run on the input sequence of (x,y,z) coordinates to cut this sequence into parts. Then each part is sent to the Trajectory Segment Analysis module of the system to check if these points can be approximated by a plane with a good accuracy. If so, the trajectory part is sent to the Feature Extraction module. If analyzed points do not belong to any plane, then system returns to the Trajectory Segmentation module.

The input to this module is a cloud of 3D points. A Principal Component Analysis (PCA) is applied and the obtained information is analyzed: three eigenvalues and variance. The input points will be assumed to lie on a plane only if the eigenvalues {e1,e2,e3} satisfy the following conditions:

$$e3 <= T1 * Variance$$

$$e1/e2 <= T2$$

The first condition - e3 is less or equal to T1 multiplied by Variance - means that the third eigenvalue e3 must capture less than T1 percent of the total variance. The second condition - the ratio of the first two eigen-values is less or equal to T2 - guarantees that the input points will belong to a plane and not a line. Both thresholds T1 and T2 are real numbers and can be determined experimentally from a database.

If both conditions are satisfied, then the input 3D points are projected onto a plane (the plane basis vectors and normal are computed by PCA). The projected trajectory is sent to the Feature Extraction module.

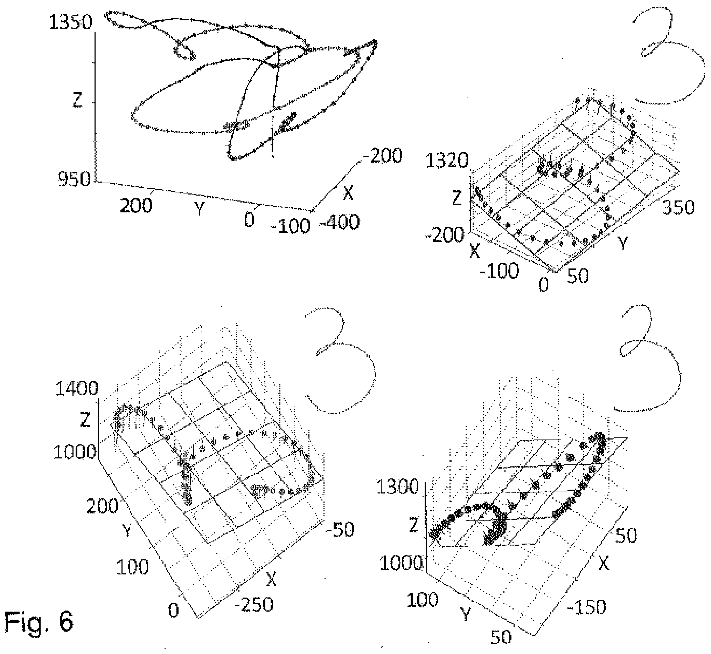

Fig. 6 shows an example wherein a user was performing digit "3" in different directions with respect to the camera. In the top row, left column - the original trajectories of the user's hand can be seen. Three trajectories of the digit are shown in red, green and blue. Each trajectory was projected onto a plane (top right and bottom).

**Template matching module**

In this module a probabilistic pattern matrix obtained from Clustering module is compared to a template matrix from Storage. The result of this comparison is then sent to the Classification module in order to decide if these pattern and template correspond to the same gesture type.

There are plenty of methods for 1D and 2D template matching. Among them the Longest Common Subsequence (LCS) method has been widely used to compare two strings. The disadvantage of the applicability of the classical LCS algorithm as well as a commonly used Dynamic Time Warping (DTW) algorithm, to the gesture recognition task is that 1D string template cannot describe a gesture with sufficient accuracy. Also a DTW algorithm being applied to a real-life scenario produces a high percent of false positive matches.

The Most Probable Longest Common Subsequence (MPLCS) algorithm is developed to compare a probabilistic template and pattern. This is a modified LCS algorithm that allows comparison of matrices rather than strings.

The two input matrices are template T and pattern P. The number of rows in both matrices is the same and corresponds to the number of clusters that characterizes a certain gesture type. The number of columns of T and P denote the number of points in the template and tested trajectories correspondingly. These two numbers may be different. The values in T and P are the probabilities of the feature vector elements to belong to the clusters.

In the present invention the vectors made of non-zero entries of matrices T and P are denoted by D(T) and D(P) correspondingly. These non-zero values are concatenated in D(T) and D(P) column-wise, which means that the values from the first column are followed by the values from the second column etc. Both template and pattern matrices are sparse, so vectors D(T) and D(P) are not too long.

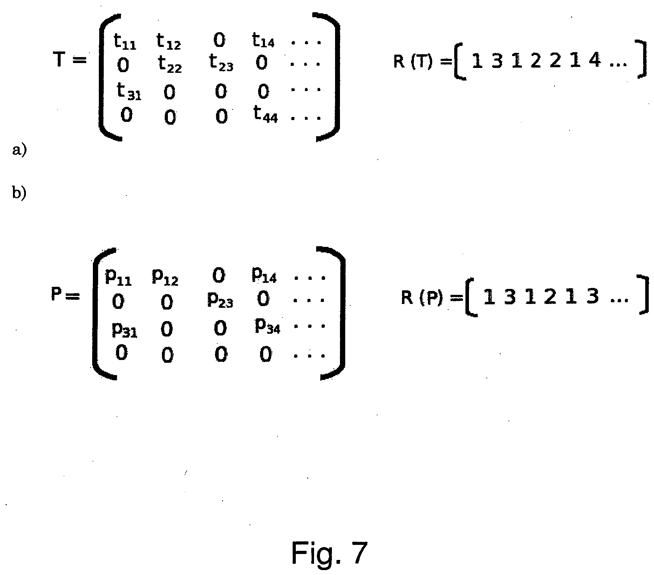

In the present invention the vectors R(T) and R(P) represent the numbers of rows of non-zero entries of template and pattern matrices T and P respectively. These numbers of rows represent the numbers of clusters, and non-zero entries are the probabilities to belong to these clusters. Figure 7 shows an example of matrices T and P, and corresponding vectors R(T) and R(P). The elements of R(T) and R(P) are numbers of rows of non-zero entries of matrices T and P.

The LCS is run to find the longest common subsequence between vectors R(T) and R(P). The obtained result corresponds to the common sequence of clusters between template T and pattern P. Due to the probabilistic structure of the data, each point of the template and pattern may have more than one common cluster. For example on Fig. 7 the first element of the feature vector belongs to the same clusters number 1 and 3 in both T and P (the first column of T and the first column of P have non-zero entries at the same places). In this case the system chooses the cluster with maximal joint probability, which is computed according to the following rule:

$$(i, k) = \text{argmax}_i \, \text{argmax}_k \, ( p_{ij} * t_{km} ) \text{ for fixed } j \text{ and } m$$

For the example from Fig. 7 it means that the system will choose a cluster number 1, if $(p_{11} * t_{11}) > (p_{31} * t_{31})$ and a cluster number 3 otherwise.

Together with the longest common subsequence of R(T) and R(P) the MPLCS finds the probability of the longest common subsequence, which equals

$$\text{prob}(\text{LCS}) = D(T(\text{LCS elements}))*D(P(\text{LCS elements})).$$

Here LCS elements are the numbers of elements that belong to the longest common subsequence of R(T) and R(P).

The output of the Template matching module is a pair of numbers: length and probability of the LCS.

**Classification module**

The Classification module is organized as a black box that makes a simple decision - "yes" or "not" given a number or a set of numbers as input.

In the current implementation of the system the Classification module accepts two input numbers, which are length and probability of the longest common subsequence between template and pattern matrices. The decision is based by determining a threshold for the input data.

The system allows character and digit gesture recognition for controlling IPTV or other computer home environment.

Although the present embodiment of the invention has been applied to digit and character gesture recognition, the system may recognize other motion gesture trajectories, such as those used in video game programs and computer interfaces.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention as defined by the appended claims.

**Claims**

1.  A system for 3D free-form hand-gesture recognition, based on hand-gestured character input, which comprises:

> a) a memory for storing images taken by a 3D camera;
> b) a computer for analyzing images representing trajectories of hand gestures and for extracting typical features related to a character during a training stage;
> c) a database for storing said typical features after said training stage;
> d) a processing unit for comparing the typical features extracted during said training stage to features extracted online,

   *characterized in that:*

> e) images of 3D hand gestures are acquired by said 3D camera, in front of which said 3D hand gestures are performed;
> f) for each gesture type, computing a template matrix T by:
>
>> f.1) constructing a matrix from all ordered sets of features of the samples of said hand-gesture in said database, where each row of said matrix contains a feature from the ordered set of features of a gesture type and each column of said matrix contains an ordered set of features of a sample of hand-gesture;
>> f.2) for the features which may be tangent angles, computing a mixture of Gaussians using the Expectation Maximization EM algorithm;
>> f.3) computing models with Gaussian components and selecting a representing model;
>> f.4) finding a number of mixture of Gaussians components for hand-gesture type;
>> f.5) computing a probabilistic pattern represented as a matrix for each gesture sample i of gesture type;
>> f.6) averaging all probabilistic pattern matrices;
>
> h) for each gesture type in the database, computing a pattern matrix P by:
>
>> g.1) extracting hand 3D position from each camera frame to form a 3D trajectory;
>> g.2) conducting a Principal Component Analysis PCA over a cloud of 3D points corresponding to said 3D trajectory, to determine if the gesture is a projected trajectory;
>> g.3) projecting a hand-gesture trajectory, to obtain a 2D projected trajectory;
>> g.4) converting the projected trajectory into a set of features, ordered from the start of the hand-gesture trajectory;
>> g.5) for each of said features, computing the probability that a feature belongs to each of the Gaussian components of a gesture type; and
>
> h) the comparison performed by said processing unit for each gesture type between a template matrix T and pattern matrix P, using a Most Probable Longest Common Subsequence MPLCS algorithm, creates a Length and Probability of Longest Common Subsequence LCS which is used by a recognition component to classify said trajectories as certain gestures or non-gestures,

i) wherein said Length and Probability are computed by:

i.1) computing from the pattern matrix P, a vector of the non zeros values of the matrix P, a vector of their row indices which correspond to indices of mixture of Gaussians component, and a vector of their column indices, which correspond to input hand-gesture feature indices;

i.2) computing from the template matrix T for each gesture type, a vector of the non zeros values of the matrix, a vector of their row indices which correspond to indices of mixture of Gaussians component, and a vector of their column indices, which correspond to the hand-gesture feature indices of the hand-gesture samples in the database;

i.3) computing the LCS of row indices and column indices;

i.4) computing the vectors of their corresponding column indices from the of vector column indices and their corresponding common probability by multiplication of probabilities from the vector of the non-zero entries of matrices T and P;

i.5) retaining only the component with the highest common probability;

i.6) computing the probability of a sequence by summing the common probabilities of all its elements and selecting the longest subsequence with the highest probability.

2. A system according to claim 1, comprising:

a) a training component, wherein mutual information is extracted from said given database of gesture trajectories;
b) a storage component, wherein said information obtained from said training stage is stored;
c) a recognition component, wherein an input trajectory is analyzed and classified either as a certain gesture from the gestures vocabulary or as a non-gesture.

3. A system according to claim 2, wherein the training component comprises the following modules:

a) a feature extraction module;
b) a learning module;
c) a clustering module;
d) a template creation module.

4. A system according to claim 3, wherein the feature extraction module receives a 3D trajectory as an input, uses inter-point directional changes as classifying features, and provides a vector of tangent angles as an output.

5. A system according to claim 3, wherein the learning module receives feature vectors obtained from the feature extraction module, analyzes said feature vectors, and provides a set of clustering rules, being a set of mean and standard deviation values of the resulting most significant clusters, wherein said learning module performs the learning for each gesture type separately and said set of clustering rules is sent to the Storage.

6. A system according to claim 3, wherein the clustering module receives as input a set of clustering rules from the Storage and a feature vector from the Feature extraction module, wherein said feature vector is clustered according to the predefined rules for creating an output in the form of a probabilistic pattern represented as a matrix.

7. A system according to claim 3, wherein the template creation module receives said probabilistic patterns as an input from the clustering module, each of said patterns is represented as a matrix, while all the matrices in a set are of the same size, wherein said template creation module takes an average value of the set of input matrices and provides as an output a template matrix of the same size as said input matrices; each element of said template is the average value of the corresponding values of input matrices; said template created is sent to said Storage.

8. A system according to claim 2, wherein the recognition component comprises the following modules:

a) a trajectory segmentation module;
b) a trajectory segment analysis module;
c) a feature extraction module;
d) a clustering module;

e) a template matching module;
f) a classification module.

9. A system according to claim 8, wherein the trajectory segmentation module receives as an input a 3D trajectory and uses a sliding window to cut said 3D trajectory into segments, said segments are the output of said trajectory segmentation module.

10. A system according to claim 8, wherein the trajectory segment analysis module receives as an input said segments from the trajectory segmentation module, and checks if the points of said segment can be approximated by a plane with a sufficient accuracy; and if so, the trajectory part is sent to the Feature Extraction module, and if the analyzed points do not belong to any plane, then system returns to said Trajectory Segmentation module.

11. A system according to claim 8, wherein the template matching module receives as an input the probabilistic pattern matrix from the Clustering module and compares the pattern matrix to the template matrix from the Storage; wherein the output of this module is a pair of numbers: length and probability of the longest common subsequence between template and pattern matrices.

12. A system according to claim 8, wherein the classification module receives as an input the two numbers of length and probability of the longest common subsequence between template and pattern matrices, and provides as an output a binary "yes" or "not" decision thereby classifying the input gesture is as a certain gesture from the gestures vocabulary or as a non-gesture.

13. A method for 3D free-form hand-gesture recognition, based on hand-gestured character input, which comprises:

   a. storing in a memory, images representing trajectories of hand-gestures, for executing a training stage,;
   b. during said training stage, extracting typical features related to said input characters, from hand-gesture trajectories;
   c. storing said typical features;
   d. analyzing an input trajectory and comparing said input trajectory to the trajectories obtained during said training stage; and
   e. classifying said input trajectory either as a certain gesture from the gestures vocabulary or as a non-gesture.
   f. *characterized in that:* images of 3D hand gestures are acquired by said 3D camera, in front of which said 3D hand gestures are performed;
   g. for each gesture type, computing a template matrix, by:

      g.1) constructing a matrix from all ordered sets of features of the samples of said hand-gesture in said database, where each row of said matrix contains a feature from the ordered set of features of a gesture type and each column of said matrix contains an ordered set of features of a sample of hand-gesture;
      g.2) for the features which may be tangent angles, computing a mixture of Gaussians using the Expectation Maximization EM algorithm;
      g.3) computing models with Gaussian components and selecting a representing model;
      g.4) finding a number of components of mixture of Gaussians for gesture type;
      g.5) computing a probabilistic pattern matrix for each hand-gesture sample i of gesture type;
      g.6) averaging all probabilistic pattern matrices;

   h. for each gesture type in the database, computing a pattern matrix P by:

      h.1) extracting hand 3D position from each camera frame to form a 3D trajectory;
      h.2) conducting a Principal Component Analysis PCA over a cloud of 3D points corresponding to said 3D trajectory, to determine if the hand-gesture is a projected trajectory;
      h.3) projecting a hand-gesture trajectory, to obtain a 2D projected trajectory;
      h.4) converting the projected trajectory into a set of features, ordered from the start of the hand-gesture trajectory;
      h.5) for each of said features, computing the probability that a feature belongs to each of the Gaussian components of a gesture type;

   i. the comparison performed by said processing unit between a template matrix T and pattern matrix P, using a Most Probable Longest Common Subsequence algorithm MPLCS, creates a Length and Probability of Longest Common Subsequence LCS which is used by a recognition component for classification,

j. wherein said Length and Probability are computed by:

j.1) computing from the pattern matrix P, a vector of the non zeros values of the matrix, a vector of their row indices which correspond to indices of mixture of Gaussians component, and a vector of their column indices, which correspond to input hand-gesture feature indices;

j.2) computing from the template matrix T for each gesture type, a vector of the non zeros values of the matrix T, a vector of their row indices which correspond to indices of mixture of Gaussians component, and a vector of their column indices Ct, which correspond to the hand-gesture feature indices of the hand-gesture samples in the database;

j.3) computing the LCS of row indices and column indices;

j.4) computing the vectors of their corresponding column indices from the vector of column indices and their corresponding common probability by multiplication of probabilities from vectors of non-zero entries of matrices T and P;

j.5) retaining only the component with the highest common probability;

j.6) computing the probability of a sequence by summing the common probabilities of all its elements and selecting the longest subsequence with the highest probability.

**14.** A method according to claim 13, wherein step (a) comprises the following steps:

i. extracting features from said input 3D trajectory, using inter-point directional changes as classifying features, and generating a feature vector, being a vector of tangent angles, as an output;

ii. learning and analyzing said feature vector for each gesture type separately, providing a set of clustering rules, being a set of mean and standard deviation values of the resulting most significant clusters, and storing said set of clustering rules in the storage;

iii. clustering said feature vector according to said set of clustering rules, for creating an output in the form of a probabilistic pattern represented as a matrix; and

iv. creating templates by taking an average value of a set of matrices received as an input, providing a template matrix of the same size as said input matrices as an output, and storing said template in the Storage.

**15.** A method according to claim 13 or 14, wherein step (c) comprises the following steps:

i. segmenting said 3D trajectory received as an input using a sliding window;

ii. analyzing said segments by checking if the points of each segment can be approximated by a plane with sufficient accuracy, and if so, extracting features from the trajectory part step, otherwise, repeating step (i);

iii. clustering the resulting feature vector;

iv. matching templates by receiving said probabilistic pattern matrix from clustering and comparing the pattern matrix to the template matrix from the Storage, thereby creating: length and probability of the longest common subsequence between template and pattern matrices; and

v. classifying the input gesture as a certain gesture from the gestures vocabulary or as a non-gesture and outputting a binary state that corresponds to the classification result.

**Patentansprüche**

**1.** System zur 3D-Freiform-Handgestenerkennung, basierend auf Zeicheneingabe durch Handgesten, welches Folgendes umfasst:

a) einen Speicher zum Speichern von Bildern, die von einer 3D-Kamera aufgenommen wurden,

b) einen Rechner, um Bilder zu analysieren, die Trajektorien von Handgesten repräsentieren, und um auf ein Zeichen bezogene, typische Merkmale während einer Trainingsphase zu extrahieren,

c) eine Datenbank zum Speichern der typischen Merkmale nach der Trainingsphase, und

d) eine Verarbeitungseinheit zum Vergleichen der während der Trainingsphase extrahierten typischen Merkmale mit online extrahierten Merkmalen,

***dadurch gekennzeichnet, dass***

e) Bilder von 3D-Handgesten durch die 3D-Kamera, vor welcher die 3D-Handgesten ausgeführt werden, erfasst werden,

f) für jeden Gestentyp: Berechnen einer Template-Matrix T durch:

f. 1) Erstellen einer Matrix aus allen geordneten Sätzen von Merkmalen der Samples der besagten Handgeste in der Datenbank, wobei jede Zeile der Matrix ein Merkmal aus dem geordneten Satz von Merkmalen eines Gestentyps enthält und jede Spalte der Matrix einen geordneten Satz von Merkmalen eines Handgesten-Samples enthält,

f.2) für die Merkmale, welche Tangentenwinkel sein können: Berechnen einer Mischung von Gaußschen unter Verwendung des Erwartungsmaximierungs-EM-Algorithmus,

f.3) Berechnen von Modellen mit gaußschen Komponenten und Auswählen eines repräsentativen Modells,

f.4) Finden einer Anzahl von gaußschen Mischungskomponenten für den Handgestentyp,

f.5) Berechnen eines Wahrscheinlichkeitsmusters, das als eine Matrix für jedes Gestenmuster i des Gestentyps dargestellt wird,

f.6) Mittelung aller Wahrscheinlichkeitsmuster-Matrizen,

g) für jeden Gestentyp in der Datenbank: Berechnen einer Mustermatrix P durch:

g.1) Extrahieren einer 3D-Position einer Hand aus jedem Kamera-Frame, um eine 3D-Trajektorie zu erstellen,

g.2) Ausführen einer Hauptkomponentenanalyse PCA über einer Wolke aus 3D-Punkten, die der 3D-Trajektorie entsprechen, um zu bestimmen, ob die Geste eine projizierte Trajektorie ist,

g.3) Projizieren einer Handgestentrajektorie, um eine 2D-projizierte Trajektorie zu erhalten,

g.4) Umwandeln der projizierten Trajektorie in einen geordneten, vom Anfang der Handgestentrajektorie ausgehenden Satz Merkmale,

g.5) für jedes der Merkmale: Berechnen der Wahrscheinlichkeit, dass ein Merkmal zu jeder der gaußschen Komponenten eines Gestentyps gehört, und

h) der Vergleich, der von der Verarbeitungseinheit für jeden Gestentyp zwischen einer Template-Matrix T und einer Muster-Matrix P unter Verwendung eines Wahrscheinlichste-längste-gemeinsame-Teilfolge-MPLCS-Algorithmus ausgeführt wird,

ergibt eine Länge und Wahrscheinlichkeit einer längsten gemeinsamen Teilfolge LCS, welche von einer Erkennungskomponente verwendet wird, um die besagten Trajektorien als bestimmte Gesten oder Nicht-Gesten zu klassifizieren,

i) wobei die Länge und Wahrscheinlichkeit berechnet werden durch:

i.1) Berechnen, aus der Muster-Matrix P, eines Vektors der Nicht-Null-Werte der Matrix P, eines Vektors ihrer Zeilenindizes, die den Indizes einer Mischung gaußscher Komponenten entsprechen, und eines Vektors ihrer Spalten-Indizes, die den Eingabe-Handgesten-Merkmalsindizes entsprechen,

i.2) für jeden Gestentyp: Berechnen, aus der Template-Matrix T, eines Vektors der Nicht-Null-Werte der Matrix, eines Vektors ihrer Zeilenindizes, die den Indizes einer Mischung gaußscher Komponenten entsprechen, und eines Vektors ihrer Spalten-Indizes, die den Handgesten-Merkmalsindizes der Handgesten-Samples in der Datenbank entsprechen,

i.3) Berechnen der LCS von Zeilen-Indizes und Spalten-Indizes,

i.4) Berechnen der Vektoren ihrer entsprechenden Spalten-Indizes aus dem Vektor der Spalten-Indizes und ihrer entsprechenden gemeinsamen Wahrscheinlichkeit durch Multiplizieren von Wahrscheinlichkeiten aus dem Vektor der Nicht-Null-Einträge der Matrizen T und P,

i.5) Beibehalten nur derjenigen Komponente mit der höchsten gemeinsamen Wahrscheinlichkeit,

i.6) Berechnen der Wahrscheinlichkeit einer Folge durch Summieren der gemeinsamen Wahrscheinlichkeiten aller ihrer Elemente und Auswählen der längsten Teilfolge mit der höchsten Wahrscheinlichkeit.

**2.** System nach Anspruch 1, umfassend:

a) eine Trainingskomponente, in der gegenseitige Informationen aus der gegebenen Datenbank von Gestentrajektorien extrahiert werden,

b) eine Speicherkomponente, in der die aus der Trainingsphase erhaltenen Informationen gespeichert werden,

c) eine Erkennungskomponente, in der eine Eingabe-Trajektorie analysiert und entweder als eine bestimmte Geste aus dem Gestenvokabular oder als eine Nichtgeste klassifiziert wird.

**3.** System nach Anspruch 2, wobei die Trainingskomponente die folgenden Module umfasst:

a) ein Merkmalsextraktionsmodul;

b) ein Lernmodul;
c) ein Clustering-Modul;
d) ein Template-Erstellungsmodul.

4. System nach Anspruch 3, wobei das Merkmalsextraktionsmodul eine 3D-Trajektorie als Eingabe empfängt, Richtungsänderungen zwischen Punkten als Klassifizierungsmerkmale verwendet und einen Vektor von Tangentenwinkeln als Ausgabe bereitstellt.

5. System nach Anspruch 3, wobei das Lernmodul von dem Merkmalsextraktionsmodul erhaltene Merkmalsvektoren empfängt, die Merkmalsvektoren analysiert und einen Satz von Clustering-Regeln bereitstellt, die einen Satz von mittleren Abweichungswerten und Standardabweichungswerten der resultierenden signifikantesten Cluster darstellen, und
wobei das Lernmodul das Lernen für jeden Gesten-Typ separat durchführt und der Satz von Clustering-Regeln an den Speicher gesendet wird.

6. System nach Anspruch 3, wobei das Clustering-Modul als Eingabe einen Satz von Clustering-Regeln vom Speicher und einen Merkmalsvektor vom Merkmalsextraktionsmodul empfängt, wobei der Merkmalsvektor gemäß den vordefinierten Regeln zum Erzeugen einer Ausgabe in Form eines als Matrix dargestellten Wahrscheinlichkeitsmusters geclustert wird.

7. System nach Anspruch 3, wobei das Template-Erstellungsmodul die Wahrscheinlichkeitsmuster als eine Eingabe von dem Clustering-Modul empfängt, jedes der Muster als Matrix dargestellt wird und alle Matrizen in einem Satz die gleiche Größe haben, wobei das Template-Erstellungsmodul einen Durchschnittswert des Satzes von Eingabematrizen bildet und als Ausgabe eine Template-Matrix mit derselben Größe wie die Eingabematrizen bereitstellt, jedes Element des Templates der Durchschnittswert der entsprechenden Werte der Eingabematrizen ist, das erstellte Template an den Speicher gesendet wird.

8. System nach Anspruch 2, wobei die Erkennungskomponente die folgenden Module umfasst:

a) ein Trajektorien-Segmentierungsmodul;
b) ein Trajektoriensegment-Analysemodul;
c) ein Merkmalsextraktionsmodul;
d) ein Clustering-Modul;
e) ein Template-Abgleichsmodul;
f) ein Klassifizierungsmodul.

9. System nach Anspruch 8, wobei das Trajektorien-Segmentierungsmodul eine 3D-Trajektorie als Eingabe empfängt und ein Schiebefenster verwendet, um die 3D-Trajektorie in Segmente zu schneiden, wobei die Segmente die Ausgabe des Trajektorien-Segmentierungsmoduls darstellen.

10. System nach Anspruch 8, wobei das Trajektorien-Segment-Analysemodul die Segmente von dem Trajektorien-Segmentierungsmodul als eine Eingabe empfängt und prüft, ob die Punkte des Segments durch eine Ebene mit einer ausreichenden Genauigkeit angenähert werden können, und wenn dies der Fall ist, der Trajektorienteil an das Merkmalsextraktionsmodul gesendet wird, und wenn die analysierten Punkte zu keiner Ebene gehören, das System zu dem Trajektorien-Segmentierungsmodul zurückkehrt.

11. System nach Anspruch 8, wobei das Template-Abgleichsmodul von dem Clustering-Modul die Wahrscheinlichkeitsmuster-Matrix als eine Eingabe empfängt und die Mustermatrix mit der Template-Matrix vom Speicher vergleicht, wobei die Ausgabe dieses Moduls ein Zahlenpaar ist: Länge und Wahrscheinlichkeit der längsten gemeinsamen Teilfolge der Template- und Mustermatrizen.

12. System nach Anspruch 8, wobei das Klassifizierungsmodul die zwei Längen- und Wahrscheinlichkeitszahlen der längsten gemeinsamen Teilfolge der Template- und Mustermatrizen als Eingabe empfängt und als Ausgabe eine binäre "Ja"- oder "Nicht"-Entscheidung liefert, wodurch die Klassifizierung der Eingabegeste als eine bestimmte Geste aus dem Vokabular der Gesten oder als eine Nicht-Geste erfolgt.

13. Ein Verfahren zur 3D-Freiform-Handgestenerkennung, basierend auf der Zeicheneingabe durch Handgesten, das Folgendes umfasst:

a. Speichern von Bildern, die Trajektorien von Handgesten darstellen, in einem Speicher, zum Ausführen einer Trainingsphase,

b. Extrahieren von typischen Merkmalen, die sich auf die Eingabezeichen beziehen, aus den Handgesten-Trajektorien, während der Trainingsphase,

c. Speichern der typischen Merkmale;

d. Analysieren einer Eingabe-Trajektorie und Vergleichen der Eingabe-Trajektorie mit den während der Trainingsphase erhaltenen Trajektorien, und

e. Klassifizieren der Eingabe-Trajektorie entweder als eine bestimmte Geste aus dem Gestenvokabular oder als Nichtgeste,

f. *dadurch gekennzeichnet, dass* Bilder von 3D-Handgesten von der 3D-Kamera erfasst werden, vor der die 3D-Handgesten ausgeführt werden,

g. für jeden Gestentyp: Berechnen einer Template-Matrix durch:

g.1) Erstellen einer Matrix aus allen geordneten Sätzen von Merkmalen der Samples der besagten Handgeste in der Datenbank, wobei jede Zeile der Matrix ein Merkmal aus dem geordneten Satz von Merkmalen eines Gestentyps enthält und jede Spalte der Matrix einen geordneten Satz von Merkmalen eines Handgesten-Samples enthält,

g.2) für die Merkmale, welche Tangentenwinkel sein können: Berechnen einer Mischung von Gaußschen unter Verwendung des Erwartungsmaximierungs-EM-Algorithmus,

g.3) Berechnen von Modellen mit gaußschen Komponenten und Auswählen eines repräsentativen Modells,

g.4) Finden einer Anzahl von Komponenten einer Mischung von Gaußschen für den Gestentyp,

g.5) Berechnen einer Wahrscheinlichkeitsmuster-Matrix für jedes Handgesten-Sample i des Gestentyps,

g.6) Mittelung aller Wahrscheinlichkeitsmuster-Matrizen,

h. für jeden Gestentyp in der Datenbank: Berechnen einer Mustermatrix P durch:

h.1) Extrahieren einer 3D-Position einer Hand aus jedem Kamera-Frame, um eine 3D-Trajektorie zu erstellen,

h.2) Ausführen einer Hauptkomponentenanalyse PCA über einer Wolke aus 3D-Punkten, die der 3D-Trajektorie entsprechen, um zu bestimmen, ob die Handgeste eine projizierte Trajektorie ist,

h.3) Projizieren einer Handgestentrajektorie, um eine 2D-projizierte Trajektorie zu erhalten,

h.4) Umwandeln der projizierten Trajektorie in einen geordneten, vom Anfang der Handgestentrajektorie ausgehenden Satz Merkmale,

h.5) für jedes der Merkmale: Berechnen der Wahrscheinlichkeit, dass ein Merkmal zu jeder der gaußschen Komponenten eines Gestentyps gehört,

i. der Vergleich, der von der Verarbeitungseinheit zwischen einer Template-Matrix T und einer Muster-Matrix P, unter Verwendung eines Wahrscheinlichste-längste-gemeinsame-Teilfolge-Algorithmus MPLCS, ausgeführt wird,

eine Länge und Wahrscheinlichkeit der Längsten Gemeinsamen Teilfolge LCS ergibt, welche von einer Erkennungskomponente zur Klassifizierung verwendet wird,

j. wobei die Länge und Wahrscheinlichkeit berechnet werden durch:

j.1) Berechnen, aus der Muster-Matrix P, eines Vektors der Nicht-Null-Werte der Matrix, eines Vektors ihrer Zeilenindizes, die den Indizes einer Mischung gaußscher Komponenten entsprechen, und eines Vektors ihrer Spalten-Indizes, die den Eingabe-Handgesten-Merkmalsindizes entsprechen,

j.2) für jeden Gestentyp: Berechnen, aus der Template-Matrix T, eines Vektors der Nicht-Null-Werte der Matrix T, eines Vektors ihrer Zeilenindizes, die den Indizes einer Mischung gaußscher Komponenten entsprechen, und eines Vektors ihrer Spalten-Indizes Ct, die den Handgesten-Merkmalsindizes der Handgesten-Samples in der Datenbank entsprechen,

j.3) Berechnen der LCS von Zeilen-Indizes und Spalten-Indizes,

j.4) Berechnen der Vektoren ihrer entsprechenden Spalten-Indizes aus dem Vektor der Spalten-Indizes und ihrer entsprechenden gemeinsamen Wahrscheinlichkeit durch Multiplizieren von Wahrscheinlichkeiten aus den Vektoren von Nicht-Null-Einträgen der Matrizen T und P,

j.5) Beibehalten nur derjenigen Komponente mit der höchsten gemeinsamen Wahrscheinlichkeit,

j.6) Berechnen der Wahrscheinlichkeit einer Folge durch Summieren der gemeinsamen Wahrscheinlichkeiten aller ihrer Elemente und Auswählen der längsten Teilfolge mit der höchsten Wahrscheinlichkeit.

**14.** Verfahren nach Anspruch 13, wobei Schritt (a) die folgenden Schritte umfasst:

i. Extrahieren von Merkmalen aus der Eingabe-3D-Trajektorie unter Verwendung von Richtungsänderungen zwischen Punkten als Klassifizierungsmerkmale, und Erzeugen eines Merkmalsvektors, der ein Vektor von Tangentenwinkeln ist, als Ausgabe;
ii. Lernen und Analysieren des Merkmalsvektors für jeden Gestentyp separat, Bereitstellen eines Satzes von Clustering-Regeln, wobei es sich um einen Satz von mittleren und Standardabweichungswerten der resultierenden signifikantesten Cluster handelt, und Speichern des Satzes von Clustering-Regeln im Speicher;
iii. Clustering des Merkmalsvektors gemäß dem Satz von Clustering-Regeln zum Erzeugen einer Ausgabe in Form eines Wahrscheinlichkeitsmusters, das als Matrix dargestellt ist; und
iv. Erstellen von Templates durch Ermitteln eines Durchschnittswertes eines Satzes von Matrizen, die als Eingabe erhalten wurden, Bereitstellen einer Template-Matrix mit derselben Größe wie die Eingabematrizen als Ausgabe, und Speichern des Templates im Speicher.

**15.** Verfahren nach Anspruch 13 oder 14, wobei Schritt (c) die folgenden Schritte umfasst:

i. Segmentieren der als Eingabe empfangenen 3D-Trajektorie unter Verwendung eines Schiebefensters;
ii. Analysieren der Segmente durch Prüfen, ob die Punkte jedes Segments durch eine Ebene mit ausreichender Genauigkeit angenähert werden können, und falls dies der Fall ist, Extrahieren von Merkmalen aus dem Teil der Trajektorie, anderenfalls Wiederholen von Schritt (i);
iii. Clustering des resultierenden Merkmalsvektors;
iv. Abgleichen von Templates durch Empfangen der Wahrscheinlichkeitsmuster-Matrix aus dem Clustering und Vergleichen der Muster-Matrix mit der Template-Matrix aus dem Speicher, wodurch Folgendes erzeugt wird: Länge und Wahrscheinlichkeit der längsten gemeinsamen Teilfolge von Template- und Muster-Matrizen; und
v. Klassifizieren der Eingabegeste als eine bestimmte Geste aus dem Gestenvokabular oder als eine Nicht-Geste und Ausgeben eines binären Zustands, der dem Klassifikationsergebnis entspricht.

## Revendications

**1.** Système pour la reconnaissance de gestes de la main en forme libre 3D, basé sur l'entrée de caractères sous forme de gestes de la main, lequel comprend :

a) une mémoire pour stocker des images qui sont prises par une caméra 3D ;
b) un ordinateur pour analyser des images qui représentent des trajectoires de gestes de la main et pour extraire des caractéristiques typiques qui sont rapportées à un caractère pendant une étape d'apprentissage ;
c) une base de données pour stocker lesdites caractéristiques typiques après ladite étape d'apprentissage ; et
d) une unité de traitement pour comparer les caractéristiques typiques qui sont extraites pendant ladite étape d'apprentissage à des caractéristiques qui sont extraites en ligne ;

**caractérisé en ce que** :

e) des images de gestes de la main 3D sont acquises par ladite caméra 3D devant laquelle lesdits gestes de la main 3D sont effectués ;
f) pour chaque type de geste, une matrice de gabarit T est calculée comme suit :

f.1) en construisant une matrice à partir de tous les jeux ordonnés de caractéristiques des échantillons dudit geste de la main dans ladite base de données, matrice dans laquelle chaque rangée de ladite matrice contient une caractéristique prise parmi le jeu ordonné de caractéristiques d'un type de geste et chaque colonne de ladite matrice contient un jeu ordonné de caractéristiques d'un échantillon de geste de la main ;
f.2) pour les caractéristiques qui peuvent être des angles tangentiels, en calculant un mélange de gaussiennes en utilisant l'algorithme espérance-maximisation EM ;
f.3) en calculant des modèles avec des composantes gaussiennes et en sélectionnant un modèle représentatif ;
f.4) en recherchant un nombre de composantes de mélange de gaussiennes pour un type de geste de la main ;
f.5) en calculant un modèle probabiliste qui est représenté en tant que matrice pour chaque échantillon de geste i de type de geste ; et

f.6) en calculant la moyenne de toutes les matrices de modèle probabiliste ;

g) pour chaque type de geste dans la base de données, une matrice de modèle P est calculée comme suit :

g.1) en extrayant une position 3D de la main à partir de chaque image de caméra pour former une trajectoire 3D ;

g.2) en mettant en oeuvre une analyse en composantes principales PCA sur un nuage de points 3D qui correspondent à ladite trajectoire 3D, pour déterminer si le geste est une trajectoire projetée ;

g.3) en projetant une trajectoire de geste de la main, pour obtenir une trajectoire projetée 2D ;

g.4) en convertissant la trajectoire projetée selon un jeu de caractéristiques, ordonné à partir du début de la trajectoire de geste de la main ;

g.5) pour chacune desdites caractéristiques, en calculant la probabilité qu'une caractéristique appartienne à chacune des composantes gaussiennes d'un type de geste ; et

h) la comparaison qui est réalisée par ladite unité de traitement pour chaque type de geste entre une matrice de gabarit T et une matrice de modèle P, en utilisant un algorithme à sous-séquence commune la plus longue la plus probable MPLCS, crée une longueur et une probabilité de sous-séquence commune la plus longue LCS, lesquelles longueur et probabilité sont utilisées par un composant de reconnaissance pour classifier lesdites trajectoires soit en tant que gestes certains, soit en tant que non gestes ; dans lequel :

i) ladite longueur et ladite probabilité sont calculées comme suit :

i.1) en calculant, à partir de la matrice de modèle P, un vecteur des valeurs non à zéro de la matrice P, un vecteur de leurs indices de rangée qui correspondent à des indices de mélange de composantes gaussiennes et un vecteur de leurs indices de colonne qui correspondent à des indices de caractéristique de geste de la main d'entrée ;

i.2) en calculant, à partir de la matrice de gabarit T pour chaque type de geste, un vecteur des valeurs non à zéro de la matrice, un vecteur de leurs indices de rangée qui correspondent à des indices de mélange de composantes gaussiennes et un vecteur de leurs indices de colonne qui correspondent aux indices de caractéristique de geste de la main des échantillons de geste de la main dans la base de données ;

i.3) en calculant la LCS d'indices de rangée et d'indices de colonne ;

i.4) en calculant les vecteurs de leurs indices de colonne correspondants à partir des indices de colonne de vecteur et de leur probabilité commune correspondante par multiplication de probabilités à partir du vecteur des entrées non à zéro de matrices T et P ;

i.5) en retenant seulement la composante qui présente la probabilité commune la plus élevée ; et

i.6) en calculant la probabilité d'une séquence en sommant les probabilités communes de tous ses éléments et en sélectionnant la sous-séquence la plus longue qui présente la probabilité la plus élevée.

**2.** Système selon la revendication 1, comprenant :

a) un composant d'apprentissage, dans lequel une information mutuelle est extraite à partir de ladite base de données donnée de trajectoires de geste ;

b) un composant de stockage, dans lequel ladite information qui est obtenue à partir de ladite étape d'apprentissage est stockée ; et

c) un composant de reconnaissance, dans lequel une trajectoire d'entrée est analysée et classifiée soit en tant que geste certain au sein du vocabulaire de gestes, soit en tant que non geste.

**3.** Système selon la revendication 2, dans lequel le composant d'apprentissage comprend les modules qui suivent :

a) un module d'extraction de caractéristique ;

b) un module d'apprentissage ;

c) un module de groupage; et

d) un module de création de gabarit.

**4.** Système selon la revendication 3, dans lequel le module d'extraction de caractéristique reçoit une trajectoire 3D en tant qu'entrée, il utilise des modifications directionnelles inter-points en tant que caractéristiques de classification et il fournit un vecteur d'angles tangentiels en tant que sortie.

**5.** Système selon la revendication 3, dans lequel :

EP 2 535 787 B1

le module d'apprentissage reçoit des vecteurs de caractéristique qui sont obtenus à partir du module d'extraction de caractéristique, il analyse lesdits vecteurs de caractéristique et il fournit un jeu de règles de groupage qui est un jeu de valeurs moyennes et de valeurs d'écart type des groupages les plus significatifs résultants ; et dans lequel : ledit module d'apprentissage réalise l'apprentissage pour chaque type de geste de façon séparée et ledit jeu de règles de groupage est envoyé au stockage.

6. Système selon la revendication 3, dans lequel le module de groupage reçoit en tant qu'entrée un jeu de règles de groupage en provenance du stockage et un vecteur de caractéristique en provenance du module d'extraction de caractéristique, dans lequel ledit vecteur de caractéristique est groupé conformément aux règles prédéfinies pour créer une sortie sous la forme d'un modèle probabiliste qui est représenté en tant que matrice.

7. Système selon la revendication 3, dans lequel le module de création de gabarit reçoit lesdits modèles probabilistes en tant qu'entrée en provenance du module de groupage, chacun desdits modèles est représenté en tant que matrice, tandis que toutes les matrices dans un jeu sont de la même taille, dans lequel ledit module de création de gabarit prend une valeur moyenne du jeu de matrices d'entrée et il fournit en tant que sortie une matrice de gabarit de la même taille que lesdites matrices d'entrée ; chaque élément dudit gabarit est la valeur moyenne des valeurs correspondantes de matrices d'entrée ; ledit gabarit qui est créé est envoyé audit stockage.

8. Système selon la revendication 2, dans lequel le composant de reconnaissance comprend les modules qui suivent :

   a) un module de segmentation de trajectoire ;
   b) un module d'analyse de segment de trajectoire ;
   c) un module d'extraction de caractéristique ;
   d) un module de groupage ;
   e) un module de mise en correspondance de gabarit ; et
   f) un module de classification.

9. Système selon la revendication 8, dans lequel le module de segmentation de trajectoire reçoit en tant qu'entrée une trajectoire 3D et il utilise une fenêtre coulissante pour découper ladite trajectoire 3D selon des segments, lesdits segments sont la sortie dudit module de segmentation de trajectoire.

10. Système selon la revendication 8, dans lequel le module d'analyse de segment de trajectoire reçoit en tant qu'entrée lesdits segments en provenance du module de segmentation de trajectoire, et il vérifie si les points dudit segment peuvent faire l'objet d'une approximation par un plan selon une précision suffisante ; et s'il en est ainsi, la partie de trajectoire est envoyée au module d'extraction de caractéristique, et si les points analysés n'appartiennent à aucun plan, alors le système retourne audit module de segmentation de trajectoire.

11. Système selon la revendication 8, dans lequel le module de mise en correspondance de gabarit reçoit en tant qu'entrée la matrice de modèle probabiliste en provenance du module de groupage et il compare la matrice de modèle à la matrice de gabarit en provenance du stockage ; dans lequel la sortie de ce module est une paire de nombres : la longueur et la probabilité de la sous-séquence commune la plus longue entre les matrices de gabarit et de modèle.

12. Système selon la revendication 8, dans lequel le module de classification reçoit en tant qu'entrée les deux nombres que sont la longueur et la probabilité de la sous-séquence commune la plus longue entre les matrices de gabarit et de modèle, et il fournit en tant que sortie une décision "oui" ou "non" binaire, d'où ainsi la classification du geste d'entrée soit en tant que geste certain au sein du vocabulaire de gestes, soit en tant que non geste.

13. Procédé pour la reconnaissance de gestes de la main en forme libre 3D, basé sur l'entrée de caractères sous forme de gestes de la main, lequel comprend :

   a) le stockage, dans une mémoire, d'images qui représentent des trajectoires de gestes de la main, pour exécuter une étape d'apprentissage ;
   b) pendant ladite étape d'apprentissage, l'extraction de caractéristiques typiques qui sont rapportées auxdits caractères d'entrée, à partir de trajectoires de geste de la main ;
   c) le stockage desdites caractéristiques typiques ;
   d) l'analyse d'une trajectoire d'entrée et la comparaison de ladite trajectoire d'entrée avec les trajectoires qui sont obtenues pendant ladite étape d'apprentissage ; et

e) la classification de ladite trajectoire d'entrée soit en tant que geste certain au sein du vocabulaire de gestes, soit en tant que non geste ;

**caractérisé en ce que** :

f) des images de gestes de la main 3D sont acquises par ladite caméra 3D devant laquelle lesdits gestes de la main 3D sont effectués ;

g) pour chaque type de geste, le calcul d'une matrice de gabarit comme suit :

g.1) en construisant une matrice à partir de tous les jeux ordonnés de caractéristiques des échantillons dudit geste de la main dans ladite base de données, matrice dans laquelle chaque rangée de ladite matrice contient une caractéristique prise parmi le jeu ordonné de caractéristiques d'un type de geste et chaque colonne de ladite matrice contient un jeu ordonné de caractéristiques d'un échantillon de geste de la main ;

g.2) pour les caractéristiques qui peuvent être des angles tangentiels, en calculant un mélange de gaussiennes en utilisant l'algorithme espérance-maximisation EM ;

g.3) en calculant des modèles avec des composantes gaussiennes et en sélectionnant un modèle représentatif ;

g.4) en recherchant un nombre de composantes de mélange de gaussiennes pour un type de geste ;

g.5) en calculant une matrice de modèle probabiliste pour chaque échantillon de geste de la main i de type de geste ; et

g.6) en calculant la moyenne de toutes les matrices de modèle probabiliste ;

h) pour chaque type de geste dans la base de données, une matrice de modèle P est calculée comme suit :

h.1) en extrayant une position 3D de la main à partir de chaque image de caméra pour former une trajectoire 3D ;

h.2) en mettant en oeuvre une analyse en composantes principales PCA sur un nuage de points 3D qui correspondent à ladite trajectoire 3D, pour déterminer si le geste de la main est une trajectoire projetée ;

h.3) en projetant une trajectoire de geste de la main, pour obtenir une trajectoire projetée 2D ;

h.4) en convertissant la trajectoire projetée selon un jeu de caractéristiques, ordonné à partir du début de la trajectoire de geste de la main ; et

h.5) pour chacune desdites caractéristiques, en calculant la probabilité qu'une caractéristique appartienne à chacune des composantes gaussiennes d'un type de geste ;

i) la comparaison qui est réalisée par ladite unité de traitement entre une matrice de gabarit T et une matrice de modèle P, en utilisant un algorithme à sous-séquence commune la plus longue la plus probable MPLCS, crée une longueur et une probabilité de sous-séquence commune la plus longue LCS, lesquelles longueur et probabilité sont utilisées par un composant de reconnaissance dans le but d'une classification ; et

j) dans lequel ladite longueur et ladite probabilité sont calculées comme suit :

j.1) en calculant, à partir de la matrice de modèle P, un vecteur des valeurs non à zéro de la matrice, un vecteur de leurs indices de rangée qui correspondent à des indices de mélange de composantes gaussiennes et un vecteur de leurs indices de colonne qui correspondent à des indices de caractéristique de geste de la main d'entrée ;

j.2) en calculant, à partir de la matrice de gabarit T pour chaque type de geste, un vecteur des valeurs non à zéro de la matrice T, un vecteur de leurs indices de rangée qui correspondent à des indices de mélange de composantes gaussiennes et un vecteur de leurs indices de colonne Ct qui correspondent aux indices de caractéristique de geste de la main des échantillons de geste de la main dans la base de données ;

j.3) en calculant la LCS d'indices de rangée et d'indices de colonne ;

j.4) en calculant les vecteurs de leurs indices de colonne correspondants à partir du vecteur d'indices de colonne et de leur probabilité commune correspondante par multiplication de probabilités à partir de vecteurs d'entrées non à zéro de matrices T et P ;

j.5) en retenant seulement la composante qui présente la probabilité commune la plus élevée ; et

j.6) en calculant la probabilité d'une séquence en sommant les probabilités communes de tous ses éléments et en sélectionnant la sous-séquence la plus longue qui présente la probabilité la plus élevée.

**14.** Procédé selon la revendication 13, dans lequel l'étape (a) comprend les étapes qui suivent :

i. l'extraction de caractéristiques à partir de ladite trajectoire 3D d'entrée, l'utilisation de modifications directionnelles inter-points en tant que caractéristiques de classification, et la génération d'un vecteur de caractéristique, qui est un vecteur d'angles tangentiels, en tant que sortie ;

ii. l'apprentissage et l'analyse dudit vecteur de caractéristique pour chaque type de geste de façon séparée, la fourniture d'un jeu de règles de groupage, qui est un jeu de valeurs moyennes et de valeurs d'écart type des groupages les plus significatifs résultants, et le stockage dudit jeu de règles de groupage dans le stockage ;

iii. le groupage dudit vecteur de caractéristique conformément audit jeu de règles de groupage, pour créer une sortie sous la forme d'un modèle probabiliste qui est représenté en tant que matrice ; et

iv. la création de gabarits en prenant une valeur moyenne d'un jeu de matrices qui sont reçues en tant qu'entrée, la fourniture d'une matrice de gabarit de la même taille que lesdites matrices d'entrée en tant que sortie, et le stockage dudit gabarit dans le stockage.

**15.** Procédé selon la revendication 13 ou 14, dans lequel l'étape (c) comprend les étapes qui suivent :

i. la segmentation de ladite trajectoire 3D qui est reçue en tant qu'entrée en utilisant une fenêtre glissante ;

ii. l'analyse desdits segments en vérifiant si les points de chaque segment peuvent faire l'objet d'une approximation par un plan selon une précision suffisante et s'il en est ainsi, l'extraction de caractéristiques à partir de la partie de trajectoire, sinon, la répétition de l'étape (i) ;

iii. le groupage du vecteur de caractéristique résultant ;

iv. la mise en correspondance de gabarit en recevant ladite matrice de modèle probabiliste en provenance du groupage et en comparant la matrice de modèle à la matrice de gabarit en provenance du stockage, d'où ainsi la création de la longueur et de la probabilité de la sous-séquence commune la plus longue entre les matrices de gabarit et de modèle ; et

v. la classification du geste d'entrée soit en tant que geste certain au sein du vocabulaire de gestes, soit en tant que non geste et l'émission en sortie d'un état binaire qui correspond au résultat de classification.

Input trajectory

Recognition component

input is classified
as a non-gesture

input is classified as a
certain gesture from
gesture vocabulary

Dynamic gesture database

Training component

new clustering rule

new template

Storage

Fig. 1

Fig. 2

Dynamic gesture database

Training component

Feature extraction module

Learning module

Storage

Clustering module

Template creation module

Fig. 3

Fig. 4

Input trajectory

Recognition component

Trajectory segmentation module

Storage

Trajectory segment analysis module

segment belongs
to a plane

segment does not
belong to a plane

Feature extraction module

Clustering module

Template matching module

Classification module

Fig. 5

Fig. 6

$$T = \begin{bmatrix} t_{11} & t_{12} & 0 & t_{14} & \cdots \\ 0 & t_{22} & t_{23} & 0 & \cdots \\ t_{31} & 0 & 0 & 0 & \cdots \\ 0 & 0 & 0 & t_{44} & \cdots \end{bmatrix} \qquad R(T) = \begin{bmatrix} 1 & 3 & 1 & 2 & 2 & 1 & 4 & \cdots \end{bmatrix}$$

a)

b)

$$P = \begin{bmatrix} p_{11} & p_{12} & 0 & p_{14} & \cdots \\ 0 & 0 & p_{23} & 0 & \cdots \\ p_{31} & 0 & 0 & p_{34} & \cdots \\ 0 & 0 & 0 & 0 & \cdots \end{bmatrix} \qquad R(P) = \begin{bmatrix} 1 & 3 & 1 & 2 & 1 & 3 & \cdots \end{bmatrix}$$

## Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009026337 A

- US 6052481 A